# EUROPÄISCHE PATENTSCHRIFT

(11) **EP 0 674 184 B1**
(45) Veröffentlichungstag und Bekanntmachung des Hinweises auf die Patenterteilung: **08.09.1999**
(21) Anmeldenummer: 95102838.0
(22) Anmeldetag: 28.02.1995
(51) Int. Cl.: G01S 13/91, G08G 1/015

(54) **Verfahren und Vorrichtung zur Klassifizierung von Fahrzeugen mittels eines Verkehrsradargerätes**
Method and apparatus for the classification of vehicles by means of a traffic radar system
Procédé et dispositif de classification de véhicules utilisant un radar pour trafic

(30) Priorität: 17.03.1994 DE 4409168
(43) Veröffentlichungstag der Anmeldung: 27.09.1995
(73) Patentinhaber: SIEMENS AKTIENGESELLSCHAFT, 80333 München (DE)
(72) Erfinder: von Pieverling, Klaus, Dr., D-82515 Wolfratshausen (DE)

(56) Entgegenhaltungen:
- DE-A- 3 002 148
- DE-A- 3 306 040
- DE-A- 3 902 582
- DE-C- 4 041 149
- DE-C- 4 307 414
- FR-A- 2 593 608
- 1992 IEEE INTERNATIONAL MICROWAVE SYMPOSIUM DIGEST, 1.Juni 1992 - 5.Juni 1992 ALBUQUERQUE, NEW MEXICO, Seiten 717-720, XP 000343420 ROE ET AL. 'Improved Discrimination of Microwave Vehicle Profiles'

## Beschreibung

Die Erfindung bezieht sich auf ein Verfahren und eine Vorrichtung zur Klassifizierung von Fahrzeugen mittels eines Verkehrsradargerätes, welches von einem erhöhten Standort aus mit nach unten gerichtetem Antennenstrahl einen nahegelegenen Straßenbereich erfaßt und eine Entfernungsmessung sowie eine Dopplerfrequenzmessung zur Profilerfassung des Fahrzeugs durchführt.

Verkehrsradargeräte werden zur Geschwindigkeitsmessung und zur Erfassung des Verkehrsgeschehens auf Autobahnen oder Autostraßen verwendet. Aus der DE-PS 33 06 040 ist ein Verfahren zur automatischen Fahrzeugklassifizierung bekannt, welches als Dauerstrichradar mit einer Auswertung des zurückkommenden dopplerverschobenen Signals arbeitet, wobei die zurückkommenden Doppelschwingungen ausgezahlt sowie der Pegel des zurückgestreuten Signals ausgewertet werden. Aus beiden Daten werden nach einem Entscheidungsalgorithmus die Fahrzeuge klassifiziert, indem die Fahrzeuglänge gewonnen wird. Eine zeitliche Erfassung des zeitlichen Verlaufs der Doppelfrequenzverschiebung ist dort nicht geoffenbart.

Ferner ist aus der DE-PS 40 41 149 ein Verfahren zum Erfassung und Erkennen von unterschiedlichen Fahrzeugarten im fließenden Verkehr bekannt, bei dem zur Erfassung und Klassifizierung der die Meßstelle passierenden Fahrzeuge mittels eines oberhalb der Fahrbahn angeordneten Detektors der Abstand zwischen durchfahrenden Fahrzeugen und Detektor in einer Vielzahl von aufeinanderfolgenden Messungen bestimmt wird, wobei ferner zur Subtraktion dieses gemessenen Abstands vom Abstand zwischen Fahrbahn und Detektor die Fahrzeughöhe berechnet wird und wobei schließlich durch Vergleich der sich aus der Vielzahl von Messungen ergebenden Fahrzeugsilhouette mit gespeicherten Mustersilhouetten die Fahrzeugart bestimmt wird. Mit dem bekannten Verfahren ist es möglich, aufgrund der relativ groben Meßgenauigkeit Fahrzeuge nur sehr grob voneinander unterscheiden zu können. Bei der Verwendung eines Radargerätes mit technisch begrenzter Bandbreite ist es nicht möglich, durch Abstandsmessungen allein eine ausreichend hohe Meßgenauigkeit zu erreichen, um z.B. PKW's untereinander zu unterscheiden.

In der DE 39 02 582-A1 ist ein Verfahren zur lokalen Verkehrsdatenerfassung und -auswertung bekannt. Auf der Grundlage einer Echtzeitauswertung von Dopplerechos auf digitaler Basis wird zunächst das Frequenzspektrum des Dopplerechos gebildet und anschließend in diesem Spektrum die Frequenz mit der maximalen Amplitude bestimmt. Aus dieser Frequenz wird die Geschwindigkeit des registrierten Fahrzeugs und aus der Fahrzeuggeschwindigkeit und der Dopplerecho-Signaldauer wird die Fahrzeuglänge bestimmt. Dies erfordert trotz eines nichtlinearen Schätzverfahrens einen sehr hohen, zeitintensiven Rechenaufwand.

In der deutschen Patentanmeldung Nr. P 43 25 672.4 vom 30.7.93, veröffentlicht am 1.2.95 als EP 0 636 900, ist ein Verfahren zur Geschwindigkeitsmessung und Klassifizierung von Fahrzeugen mittels eines Verkehrsradargerätes beschrieben. Das Radargerät erfaßt vom erhöhten Standort aus einen Straßenbereich, wobei die Geschwindigkeit und Klassifizierungsmerkmale des Fahrzeugs in unterschiedlichen Entfernungsbereichen bezüglich des Radargerätes erfaßt werden. Dabei werden die Geschwindigkeit in einem weiter abliegenden und der Fahrzeugumriß mindestens in einem nahegelegenen Entfernungsbereich erfaßt. Mit einer zusätzlichen Modulation des Radarsenders des Verkehrsradargerätes wird eine Entfernungsselektion durchgeführt und hiermit die Silhouette des Fahrzeuges zur Klassifizierung vermessen. Für die Klassifizierungen wird der Radarstrahl nach unten gerichtet. Bei dem bekannten Verfahren ergeben sich beim Erkennen der Fahrzeugprofile Probleme hinsichtlich der Konturschärfe und der Ecken und Kanten der Fahrzeugsilhouette. Zur Erzielung einer besseren Konturschärfe ist dort eine Methode beschrieben, welche jedoch nur für Ecken und Kanten des Fahrzeuges wirksam ist, nicht hingegen für glatte Flachen, die den wesentlichen Anteil des Fahrzeug-Profiles ausmachen.

Aufgabe der Erfindung ist der optimale Einsatz von Radargeräten für die Klassifizierung von Verkehrsteilnehmern, z.B. auf Autobahnen als Basis für eine wirkungsvolle Verkehrssteuerung. Dazu soll ein Verfahren angegeben werden, welches eine Feinidentifizierung zur genauen Klassifizierung von Fahrzeugen ermöglicht, so daß das jeweilige Fahrzeug mit einem weiteren, in einem benachbarten Streckenabschnitt eingesetzten Radargerät wiedererkannt werden kann. Ferner soll eine Vorrichtung zur Durchführung dieses Verfahrens angegeben werden.

Diese Aufgabe wird bezüglich des Verfahrens mit den kennzeichnenden Merkmalen des Anspruchs 1 und bezüglich der Vorrichtung mit den Merkmalen des Anspruchs 3 gelost.

Bei dem erfindungsgemäßen Verfahren wird die Profilhöhe mittels der Entfernungsmessung und zusätzlich die Profilneigung mittels der Dopplerfrequenzmessung ermittelt. Dabei wird aus der Frequenzanalyse des vom Auftreffpunkt reflektierten Radarstrahls sowie dem zugehörigen Entfernungsbereich die Fahrzeugklassifizierung durchgeführt. Das Radargerät mit der Fähigkeit zur Entfernungsmessung und Dopplerfreqenzmessung ermöglicht es, die Profilhöhe und in Kombination dazu, aufgrund der Dopplerfrequenzmessung, die Profilneigung am jeweiligen Auftreffpunkt des Radarstrahles auf dem Fahrzeug das Fahrzeugprofil zu erkennen und als Basis für die Fahrzeugklassifizierung auszuwerten.

Es wird also durch eine laufende Messung der Dopplerfrequenz der Verlauf der Steigung des Fahrzeugprofiles, das ist der Winkel zwischen der Tangente an die Fahrzeugsilhouettenlinie und der Straße, erfaßt. Dabei entsteht diese Dopplerfrequenz infolge der Relativbewegung zwischen dem Radargerät und der momentan angestrahlten Fahrzeugoberfläche. Hierbei ist die Dopplerfrequenz proportional zum Tangens des Winkels zwischen dem Radarstrahl und der Senkrechten auf die Tangente der momentan erfaßten Fahrzeugsilhouettenlinie.

Erfindungsgemäß fungiert die Abstandsmessung als Grobmessung und die Dopplerfrequenzmessung als Feinmessung. Das hat den Vorteil, daß eine Unterscheidung zwischen den einzelnen PKW-Typen möglich ist, was besonders vorteilhaft ist, wenn man ein Fahrzeug, welches an einem Radarstandort erfaßt wurde, an einem benachbarten Radarstandort wieder auffinden möchte, z.B. für eine Verlehrsleitung.

Um bestimmte Fahrzeugklassen wieder zu erkennen, werden die ermittelten Abstands- und Frequenzwerte für die Wiedererkennung von Fahrzeugprofilen bzw. Fahrzeugklassen mit Katalogwerten verglichen.

Dabei wird die Geschwindigkeit des Fahrzeugs gemessen und zur Profilerfassung mit herangezogen, indem aus den Geschwindigkeitsdaten horizontale Profildaten, z.B. die Fahrzeuglänge, abgeleitet und für eine Fahrzeugkatalogisierung verwendet werden. In vorteilhafter Weise kann dabei die Fahrzeuggeschwindigkeit auch mit dem Verkehrsradargerät selbst für die Profilerfassung ermittelt werden, wobei durch eine zeitliche Analyse der beim Einfahren eines Fahrzeugs in den Antennenstrahl erfolgenden Radarsignaländerungen (z.B. infolge des von der Straßenoberfläche reflektierten Radarstrahls) die Geschwindigkeit gewonnen wird. Die zeitlichen Signaländerungen laufen dabei proportional zur Geschwindigkeit ab, d.h., wenn die prinzipielle Kurvenform der Radarsignale bekannt ist, kann durch Messung des Zeitabstandes bestimmter charakteristischer Signalmerkmale die Geschwindigkeit ermittelt werden.

Die gestellte Aufgabe wird bezüglich der Vorrichtung dadurch gelöst, daß dem Radargerät ein Signalverstärker und diesem ein Analog-Digital-Wandler nachgeschaltet ist, dessen Ausgang auf eine Entfernungsfilterbank mit mehreren Entfernungsfiltern führt. Jedem Entfernungsfilter ist eine Dopplerfrequenz-Filterbank mit mehreren Dopplerfrequenzfiltern nachgeschaltet. Die Ausgangssignale der Dopplerfrequenzfilter werden einer Amplitudenberechnungseinrichtung zugeführt, dessen Ausgangssignale einer Profilauswerteeinrichtung zugeführt werden.

Die Erfindung wird im folgenden näher erläutert. Dabei zeigen
- Fig. 1: oben eine Verkehrsradargerätanordnung mit Blick von oben auf die Straße und darunter eine Seitenansicht in prinzipieller Darstellung,
- Fig. 2a: eine Fahrzeugsilhouette von der Seite
- Fig. 2b und: ein Diagramm eines entsprechenden Amplitudenverlaufs
- Fig. 2c: die entsprechende Profilneigung aufgrund der Dopplerfrequenzanalyse und

Fig. 3 in prinzipieller Darstellung an einem Blockschaltbild eine mögliche Schaltungsanordnung für die Profilerfassung und -auswertung.

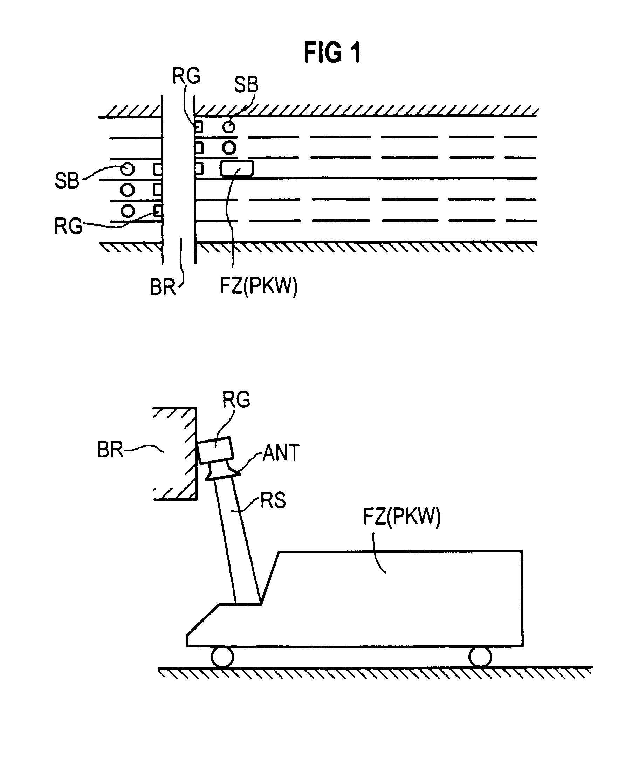

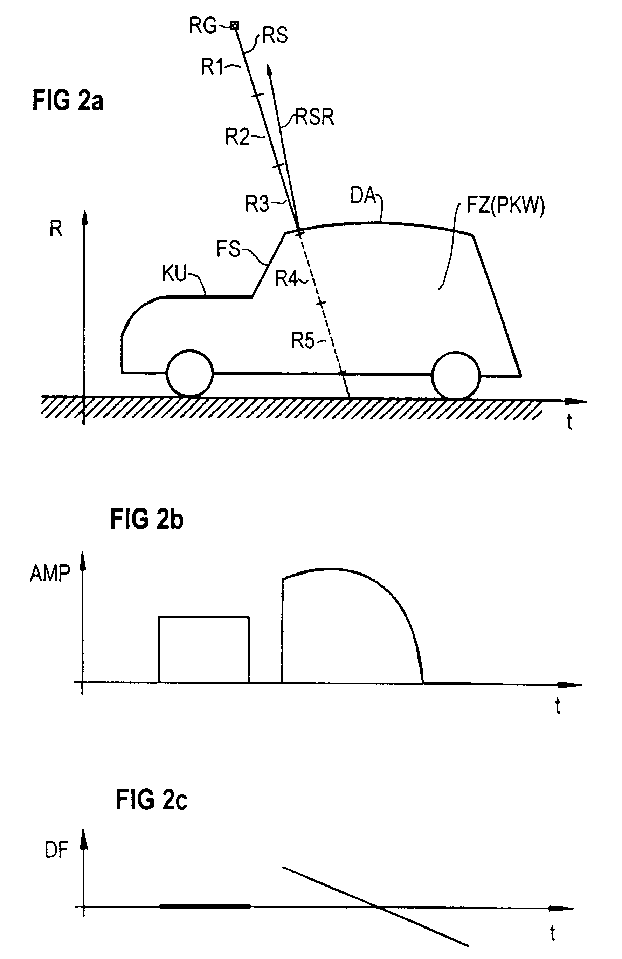

In Fig. 1 ist die Anordnung eines Verkehrsradargerätes in Draufsicht und und darunter in Seitenansicht dargestellt, wie es in der Patentanmeldung P 43 25 672 beschrieben ist. Im allgemeinen wird bei einem Verkehrsradargerät RG, das auf einer Brücke BR montiert ist, der Antennenstrahl flach zur Straßenoberfläche gerichtet. Dies ermöglicht zwar eine optimale Geschwindigkeitsmessung, ist jedoch für eine Fahrzeug-Klassifizierung ungünstig, da nur die Frontpartie erfaßt werden kann. Für die Fahrzeug-Klassifizierung wird, wie in Fig.1 unten und auch in Fig.2a gezeigt, der Radarstrahl RS steil nach unten gerichtet. Die obere Bildhälfte der Fig.1 zeigt einen Blick von oben auf die Straße. Es sind mehrere Radargeräte RG dargestellt, die in diesem Beispiel an einer Brücke BR montiert sind. Jedes Radargerät RG ist dabei einer Fahrspur zugeordnet. Die kleinen Kreise auf der Straße deuten das Auftreffen des Radarstrahls RS auf den Boden an. Dieser von der Antenne beleuchtete Straßenbereich ist mit SB bezeichnet. Ein in diesem Bereich SB einfahrendes Fahrzeug FZ wird vom Radarstrahl erfaßt und vermessen.

Das erfindungsgemäße Verfahren zur Fahrzeug-Klassifizierung wird anhand der Fig. 2 erläutert. In Fig. 2a ist in Seitenansicht das Fahrzeug FZ als PKW dargestellt, der vom Radarstrahl RS des Radargerätes RG erfaßt wird. Dabei setzt sich das Radarechosignal eines Fahrzeugs aus zwei wesentlichen Komponenten mit unterschiedlichen Eigenschaften zusammen: Die Reflexionen von Ecken und Kanten des Fahrzeugs und die Reflexionen von glatten Flächenbereichen des Fahrzeugprofils. Ekken und Kanten streuen das Sendesignal und liefern dabei vergleichsweise schwache Echos. Glatte Flächen hingegen wirken wie ein optischer Spiegel. Die Echokomponenten dieser spiegelnden Bereiche sind für die Messung und Auswertung der reflektierten Echosignale RSR besonders bedeutsam und sind Grundlage des erfindungsgemäßen Verfahrens für die Fahrzeug-Klassifizierung.

Der in Fig. 2a gezeigte PKW enthält im wesentlichen zwei größere glatte Profilbereiche, die ebene Kühlerhaube KU und das gewölbte Dach DA. Fahrt dieser PKW durch den Radarstrahl RS, so wird der Radarstrahl RS durch die spiegelnde Profilfläche umgelenkt. Flächenbereiche, die senkrecht zum Radarstrahl gerichtet sind, liefern dabei maximale Reflexionsenergie. Fig. 2a zeigt die Richtung des Radarstrahls RS und des reflektierten Radarstrahles RSR. Je nach Abweichung des Radarstrahls von der optimalen Richtung direkt auf das Radargerät RG zu sinkt die empfangene Echoenergie. Unter der Fig. 2a ist in Fig.2b der entsprechende Amplitudenverlauf AMP der Echosignale über den Profilverlauf gezeichnet. Dabei ist zu erkennen, daß Profilbereiche mit sehr kleiner Reflexionsenergie existieren, beispielsweise die Frontscheibe FS sowie auch der Heckbereich des Fahrzeugs. Der Amplitudenverlauf AMP ist ein Maß für die Lotrichtung des vom Radarstrahl erfaßten Profilbereichs. Zur Vereinfachung wird im weiteren der Einfluß der Profilkrümmung senkrecht zur Zeichenebene vernachläßigt. Es wird also ein ebener Profilverlauf senkrecht zur Zeichenebene angenommen.

Unter der Fig.2b ist in der Fig.2c eine Doppler-Freqenz-Analyse der empfangenen Signalechos vom PKW, welcher in den Radarstrahl einfahrt, dargestellt. Die Dopplerfrequenz DF ist umso größer, je stärker sich die Entfernung zwischen dem Radargerät RG und dem Auftreffpunkt der Radarstrahlen auf der PKW-Oberfläche zeitlich (t) ändert. Der in Fig. 2 gezeichnete Frequenzverlauf wird im folgenden näher erläutert. Dabei ist bei dieser Dopplerfrequenzanalyse das in Fig. 2a gezeigte Fahrzeug mit zu betrachten. Die Kühlerhaube KU ist dort als ebene Fläche gezeichnet. Sie repräsentiert also einen ebenen Spiegel. Für den über diese Fläche streichenden Radarstrahl RS tritt keine Änderung des Abstandes vom Radargerät RG zum Fahrzeug FZ ein. Die gemessene Dopplerfrequenz DF ist unabhängig von der Fahrzeuggeschwindigkeit gleich Null. Der gleiche Wert wird an der Dachkuppe des Fahrzeugdachs DA gemessen. Anders liegen die Verhältnisse im vorderen und hinteren Bereich des Daches. Im vorderen Bereich kommt dem Radargerät RG gewissermaßen ein Spiegel entgegen, im hinteren Bereich entfernt sich der Spiegel. Dementsprechend entsteht im vorderen Bereich eine positive, im hinteren Bereich eine negative Dopplerfrequenz DF (Fig. 2c). Die Dopplerfrequenz ist dabei proportional zum Produkt aus der Fahrzeuggeschwindigkeit und der Steigung des Profils. Die Dopplerfreqenzanalyse gibt also den Steigungswert des Profils bzw. die Profilneigung des Fahrzeugs wieder. Dieses Meßverfahren funktioniert gut in den begrenzten Profilbereichen, deren Reflexionsrichtung noch innerhalb der Strahlbreite der Radarantenne liegt. In diesem Bereich ist das Verfahren auch sehr empfindlich, so daß sich die Dopplerfrequenz sehr stark mit der Steigungsrichtung des Profils ändert.

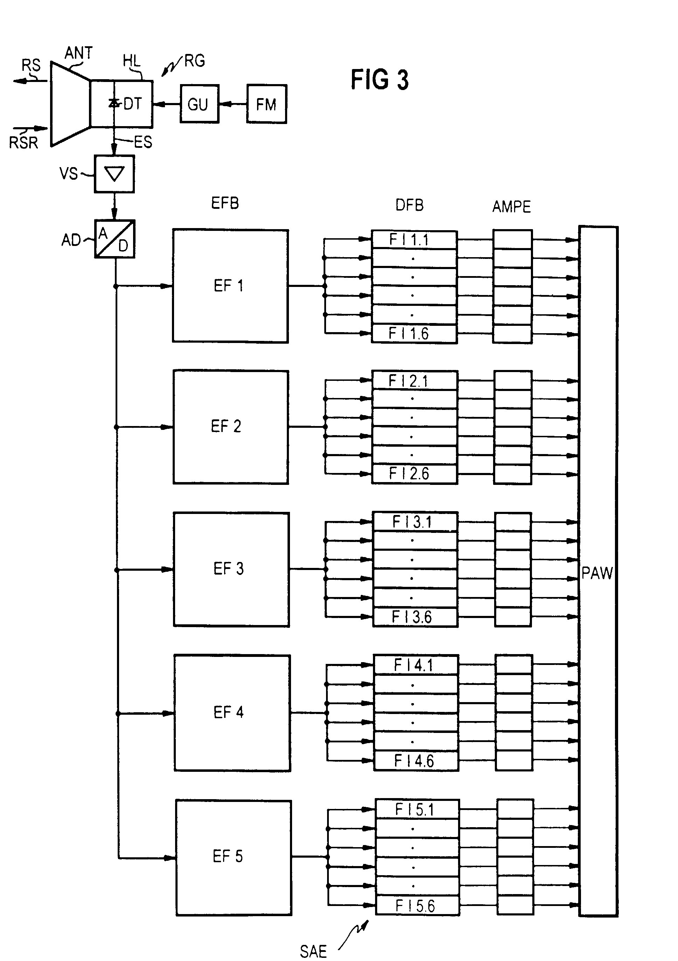

Nach diesem oben geschilderten Radarmeßprinzip arbeitet das erfindungsgemäße Verfahren zur Fahrzeug-Klassifizierung das nun im vorliegenden Schaltbeispiel an einer prinzipiellen Darstellung gem. Fig. 3 erläutert wird. Das Radargerät RG arbeitet dabei nach dem FMCW-Verfahren mit der Fähigkeit, sowohl Dopplerfrequenz als auch Entfernungsmessungen durchführen zu können. Ein derartiges Radargerät ist in dem deutschen Patent Verkehrsradargerät Nr. 4307414 C1 beschrieben.

Der Radarsender des Radargerätes RG besteht aus dem Gunnoszillator GU, dessen Frequenz über den Frequenzmodulator FM sägezahnförmig gesteuert wird. Der Gunnoszillator GU ist über den Hohlleiter HL mit der Antenne ANT verbunden. Das von der Antenne ANT empfangene Echo (RSR) überlagert sich mit dem Sendesignal RS. In dem Hohlleiter HL ist der Detektor DT eingebaut. Dieser wirkt als Mischer und liefert aus den beiden sich überlagernden Signalkomponenten das Empfangssignal ES, welches im Verstärker VS verstärkt und über einen Analog-Digitalwandler AD einer Signalauswerteeinrichtung SAE zugeführt wird.

Die Signalauswerteeinrichtung SAE enthält eine Entfernungsfilterbank EFB mit den Entfernungsfiltern EF1 bis EF5. Jedem Entfernungsfilter EFn ist eine Dopplerfilterbank DFB mit mehreren Dopplerfrequenzfiltern FIi, bei diesen prinzipiellen Schaltbeispielen FI1.1 bis FI5.6, nachgeschaltet. Die Amplituden AMP der Ausgangssignale dieser Filter FI1.1 bis FI5.6 werden in einer nachgeordneten Amplitudenberechnungseinrichtung AMPE ermittelt und der Profilauswerteeinrichtung PAW zugeführt.

Im folgenden wird die Funktionsweise der Signalauswerteeinrichtung SAE beschrieben. Durch die sägezahnförmige FM-Modulation des Sendesignals (RS) ergibt sich ein Empfangssignal ES mit einer zur Echoentfernung proportionalen Frequenz. Diese Frequenz wird in der Entfernungsfilterbank EFB ausgewertet. Je nach Entfernung (Entfernungsbereiche R1 bis R5, siehe Fig. 2a) der Radarechopunkte liefert dabei eines der Filter EF1 bis EF5 maximale Amplituden AMP (Fig. 2b). Somit ist jedem Filter EF1 bis EF5 ein bestimmter Entfernungsbereich R1 bis R5 zugeordnet (z.B. 1 bis 5 m). Diese Entfernungsbereiche sind in Fig. 2a skizziert. Die Auswertung (AMPE) der Amplituden AMP der Entfernungsfilter EF1 bis EF5 liefert die Silhouette des Fahrzeugs mit einer Quantisierung von beispielsweise 1 m bei einem FM-Modulationshub von 150 MHz.

Die nachgeschaltete Dopplerfrequenz-Filterbank DFB ermöglicht nun eine wesentlich genauere Profilerkennung, und dies ist der eigentliche Gegenstand der Erfindung. Die nachgeschalteten Dopplerfrequenzfilter (FI1.1 bis FI5.6 in diesem Ausführungsbeispiel) liefern die bereits oben beschriebenen Steigungswerte (siehe Fig.2c, des Fahrzeugprofils mit hoher Genauigkeit.

Im weiteren werden die Wirkungsweise der Dopplerfrequenz-Filterbank DFB und der Profilauswerteeinrichtung PAW näher beschrieben. In der Profilauswerteeinrichtung PAW laufen die Amplituden AMP aller, in diesem Fall 30, Filter der Dopplerfilterbank DFB. Die Amplituden AMP aller dieser Filter werden laufend verglichen und die Filternummer mit der größten Amplitude ermittelt. Wie in Fig.2a gezeigt, fällt der momentane, vom Radargerät erfaßte Profilbereich in den Entfernungsbereich R3. Dementsprechend liegt das Maximum der Amplitude (AMP max) in dem Block der Dopplerfilterbank, die dem Entfernungsfilter EF3 zugeordnet ist, in diesem Fall in dem Dopplerfrequenzfilter FI3.5. Die Filternummer mit maximaler Amplitude liefert nun drei Meßwerte, nämlich die momentane Profilhöhe, das entspricht dem Meßpunkt in Fig.2a, also dem Entfernungsbereich R3, welcher durch die Nummer des zugehörigen Entfernungsfilters EF3 gekennzeichnet ist. Als weiterer Meßwert wird die Steigung des Profils geliefert, das entspricht dem Meßpunkt gem. der Fig. 2c, welcher gekennzeichnet ist durch den zweiten Index des Dopplerfrequenzfilters FI3.5. Und als dritter Meßwert erhält man die Amplitude (AMP), das entspricht dem Meßpunkt gemäß der Fig. 2b und somit der Filteramplitude des Dopplerfrequenzfilters FI3.5. Die Amplitude AMP gem. Fig. 2b gibt darüber Aufschluß, ob ein brauchbarer Profilmeßwert vorliegt oder nicht. Liegt das Amplitudenmaximum unter einem minimalen Schwellwert, so wird ein Profilbereich erfaßt, der den Antennenstrahl außerhalb der Empfangsstrahlbreite ablenkt. Mit diesen drei Meßwerten ist eine Klassifizierung des Fahrzeugs bzw. die Erkennung und Zuordnung der Fahrzeugshilouette zu bestimmten Fahrzeugtypen möglich.

Eine Verbesserung der Profilauswertung wird mit Hilfe einer Interpolation geschaffen. Das beschriebene Auswerteverfahren liefert aufgrund der geringen Zahl der Filter in den beiden Filterbänken nur grobquantisierte, also nicht sehr genaue Meßergebnisse. Dies kann durch das im folgenden beschriebene Interpolationsverfahren verbessert werden.

Die Frequenzcharakteristik der hier verwendeten Filterbanke haben im allgemeinen keine rechteckige Form, d.h. die Selektionskurve der Filter überlappt sich. Dies bedeutet, daß beispielsweise nicht nur am Ausgang des Entfernungsfilters EF3 sondern insbesondere an den Ausgängen der Nachbarfilter EF2 und EF4 nennenswerte Signale auftreten. Ein Amplitudenvergleich zwischen den Filtern ermöglicht somit eine erhebliche Verbesserung der Meßgenauigkeit. Dies gilt sowohl für die Profilwertmessung, wie in Fig. 2a veranschaulicht, als auch für die Steigungswertmessung, in Fig.2c veranschaulicht. Wurde, wie oben beschrieben, das Filter FI3.5 als Filter mit der maximalen Amplitude AMP erkannt, so wird nun bei dem erfindungsgemäßen Verfahren in seiner Weiterbildung die Amplitude des Filters FI3.5 mit den Amplituden der benachbarten Filter FI2.5 und FI4.5 verglichen. Bei diesem Ausführungsbeispiel wird nun festgestellt, daß das Filter FI4.5 eine größere Amplitude liefert als das Filter FI2.5. Dies entspricht auch der Darstellung nach Fig. 2a, denn der Radarstrahl RS trifft auf einen Profilpunkt, der an der Grenze zwischen dem Entfernungsbereich R3 und R4 liegt. Aus der Charakteristik der Filter und dem Amplitudenunterschied ergibt sich ein entsprechender Interpolationswert.

Bei der Interpolation der Profil-Steigungswerte, also der Doppleerfrequenz, wird analog verfahren. hierzu vergleicht man die Amplituden der Dopplerfrequenzfilter untereinander, die dem Entfernungsfilter mit maximaler Amplitude zugeordnet sind. In dem gezeigten Beispiel betrifft dies die Dopplerfrequenzfilter des Entfernungsfilters EF3. Dabei wird die Amplitude des Dopplerfilters FI3.5 (maximale Amplitude), mit den Amplituden der Nachbarfilter Fi 3.4 und FI3.6 verglichen und der Dopplerfrequenzwert entsprechend interpoliert.

Für eine Weiterverarbeitung der Meßwerte Profilhöhe und Profilsteigung können die Meßwerte mit gespeicherten Werten verglichen werden. Die oben beschriebenen Meßwerte lassen sich zur Klassifizierung eines Fahrzeugs dadurch nutzen, daß man jeweils ein Meßwertpaket mit katalogisierten gespeicherten Werten vergleicht und dadurch den Typ des Fahrzeugs ermittelt, z.B. als Basis für das Wiederauffinden des Fahrzeugs durch ein anderes Radargerät in einem benachbarten Streckenabschnitt. Das hat jedoch den Nachteil, daß dieses Verfahren eine sehr umfangreiche Meßdatenbasis für den Vergleich benötigt. Daher wird in einer weiteren Ausgestaltung der Erfindung vorgeschlagen, durch geschickte Kombination der Meßdaten das geometrische Hohenprofil bzw. die Profilhöhe des Fahrzeugs möglichst genau zu rekonstruieren. Diese Kombination wird folgendermaßen durchgeführt. Die Integration der Steigungswerte (Fig.2c) liefert ein sehr glattes Hohenprofil. Dabei kann die Integration nur innerhalb des Abschnittes mit kontinuierllich vorhandener ausreichender Amplitude, also beispielsweise innerhalb des Dachbereiches, durchgeführt werden. Die Integration ergibt dabei eine recht gleichmäßige Dachform, wie Fig. 2a dargestellt. Die Integration des Steigungswertes gibt allerdings hierbei keinerlei Aufschluß darüber, in welcher Hohe das PKW-Dach über der Straßenoberfläche liegt. Diese Information wird jedoch mittels der ProfilhöheMeßwerte (Fig. 2a) gewonnen. Durch die Kombination läßt sich somit die Fahrzeugshilouette sehr gut abschnittsweise rekonstruieren. Diese Ergebnisse lassen sich mit geometrischen Katalogen vergleichen.

Eine Weiterbildung des erfindungsgemäßen Verfahrens besteht nun darin, daß die Fahrzeuggeschwindigkeit gemessen wird und zur Profilklassifizierung herangezogen wird. Aus Fig. 2 ist ersichtlich, daß die Profilhöhe die Amplitude des reflektierten Radarstrahls sowie der Steigungswert des Profils über der Zeit t dargestellt sind, d.h. die Abszisse der Meßwerte in Fig.2 ist die Zeit p. Mit der gemessenen Fahrzeuggeschwindigkeit ist nun eine Eichung der Profilabszissenachse möglich. Für einen Vergleich in einemm Katalog mit geometrischen Profildaten erfolgt eine streckenbezogenen Eichung der Abszisse. Dabei sind insbesondere horizontale Profildaten, wie etwa die Fahrzeuglänge, wesentlich.

Die Eichung der Abszisse in Streckeneinheiten ist ohne weiteres möglich, wenn die Geschwindigkeit des Fahrzeugs bekannt ist. Die Geschwindigkeit kann dabei von einem anderen Sensortyp, beispielsweise einer Induktionsschleife, einem zweiten, mit flachen, zur Geschwindigkeitsmessung optimalen Radargerät geliefert werden. Es kann auch das Klassifizierungsradar mit einem zweiten Antennenstrahl ausgerüstet sein, wie dies in der Patentanmeldung P 43 25 672 beschrieben ist.

In einer Weiterbildung der Erfindung kann auch mit dem hier verwendeten Klassifizierungsradargerät eine Geschwindigkeit in einer Art Grobmessung ermittelt werden. Solange sich kein Fahrzeug im Radarstrahl befindet (Fig.2a) wirkt die Straßenoberfläche als ebener Spiegel und liefert ein definiertes Straßen-Reflexionssignal mit der Dopplerfrequenz Null und einer dem Abstand Radargerät zur Straße entsprechenden Entfernung (die bekannt ist). Tritt nun ein Fahrzeug in den Radarstrahl ein, so wird der yom Radarstrahl getroffene Straßenbereich zunehmend abgedeckt, d.h. das Straßen-Reflexionssignal ändert sich von seinem Ruhewert zu Null hin. Dieser Übergang erfolgt nicht schlagartig, sondern hängt im wesentlichen von folgenden Parametern ab: der Strahlenbreite der Antenne, der Richtung des Antennenstrahls, der Aufstellungshohe des Radargerätes und der Geschwindigkeit des Fahrzeugs. Außer der Geschwindigkeit sind sämtliche Einflußparameter konstant, d.h. durch zeitliche Analyse des Straßenreflexionssignals beim Eintreffen eines Fahrzeugs kann dessen Geschwindigkeit bestimmt werden und zur obengenannten Eichung der Profilabszissenachse herangezogen werden.

## Patentansprüche

1. Verfahren zur Klassifizierung von Fahrzeugen mittels eines Verkehrsradargerätes, welches von einem erhöhten Standort aus mit steil nach unten gerichtetem Radar-Antennenstrahl einen nahegelegenen Straßenbereich erfaßt und eine Entfernungsmessung sowie eine Dopplerfrequenzmessung zur Profilerfassung des Fahrzeugs durchführt, wobei die Fahrzeugsilhouette durch laufende Messung des Abstandes zwischen dem Radargerät und der momentanen Reflexionsfläche des den Radarstrahl durchfahrenden Fahrzeuges als Fahrzeugsilhouette erfaßt wird,
**dadurch gekennzeichnet**, daß zur Feinidentfikation von Fahrzeugen durch eine laufende Messung der Dopplerfrequenz der Verlauf der Steigung des Fahrzeugprofiles, d.h. der Winkel zwischen der Tangente an die Fahrzeugsilhouettenlinie und der Straße, erfaßt wird, und daß aus der Proportionalität der gemessenen Dopplerfrequenz zum Tangens des Winkels zwischen Radarstrahl und der Senkrechten auf die Tangente der momentan erfaßten Fahrzeugsilhouettenlinie die Fahrzeuge klassifiziert und katalogisiert werden.

2. Verfahren nach Anspruch 1,
**dadurch gekennzeichnet**, daß die ermittelten Abstands- und Frequenzwerte für eine Wiederkennug bestimmter Fahrzeugklassen mit den Katalogwerten verglichen werden.

3. Vorrichtung zur Durchführung des Verfahrens nach einem der vorhergehenden Ansprüche 1 oder 2, mit einem Verkehrsradargerät mit steil nach unten gerichtetem Radar-Antennenstrahl, das Einrichtungen zur Entfernungsmessung und zur Dopplerfrequenz messung enthält,
**dadurch gekennzeichnet,** daß für die Entfernungsmessung eine Entfernungsfilterbank (EFB) aus mehreren (n) Entfernungsfiltern (EF1 bis EFn) vorgesehen ist, die über einen Signalverstärker (VS) und einen Analog-Digital-Wandler (AD) dem Radargerät (RG) nachgeschaltet sind, wobei mehrere (n) Entfernungsbereiche (R1 bis Rn) gebildet werden, daß jedem Entfernungsfilter (EFn) eine Dopplerfrequenz-Filterbank (DFB) mit mehreren (i) Dopplerfrequenzfiltern (FIni) nachgeschaltet ist, und daß die Amplituden (AMP) der jeweiligen Ausgangssignale von den Dopplerfrequenzfiltern (FI,ni) ermittelt (AMPE) und einer Profilauswerteeinrichtung (PAW) zugeführt werden.

4. Vorrichtung nach Anspruch 3,
**dadurch gekennzeichnet,** daß die aus den Filterbänken für die Entfernung und Dopplerfrequenz gewonnenen Meßwerte durch Amplitudenvergleich der Einzelfilter interpoliert werden.

## Claims

1. Method for classification of vehicles by means of a traffic radar system which, from an elevated location, uses a radar antenna beam pointing steeply downwards to cover a road area close to it, and which carries out a range measurement as well as a Doppler-frequency measurement in order to detect the profile of the vehicle, in which case the vehicle silhouette is detected by continuously measuring the distance between the radar system and the instantaneous reflection area of the vehicle passing through the radar beam, as the vehicle silhouette,
**characterized** in that, for fine identification of vehicles by means of a continuous measurement of the Doppler frequency, the profile of the gradient of the vehicle profile is detected, that is to say the angle between the tangent to the vehicle silhouette line and the road, and in that the proportionality of the measured Doppler frequency to the tangent of the angle between the radar beam and the perpendicular to the tangent of the instantaneously detected vehicle silhouette line is used to classify and catalogue the vehicles.

2. Method according to Claim 1,
**characterized** in that the determined distance and frequency values are compared with the catalogue values, for re-identification of specific vehicle classes.

3. Apparatus for carrying out the method according to one of the preceding Claims 1 or 2, using a traffic radar system having a radar antenna beam which points steeply downwards, and which traffic radar system contains devices for range measurement and for Doppler-frequency measurement,
**characterized** in that a range filter bank (EFB) comprising a plurality (n) of range filters (EF1 to EFn) is provided for the range measurement, which range filters (EF1 to EFn) are connected downstream of the radar system (RG) via a signal amplifier (VS) and an analogue/digital converter (AD), in which case a plurality (n) of range bands (R1 to Rn) are formed, in that each range filter (EFn) has connected downstream of it a Doppler-frequency filter bank (DFB) having a plurality (i) of Doppler-frequency filters (FIni), and in that the amplitudes (AMP) of the respective output signals from the Doppler-frequency filters (FI, ni) are determined (AMPE), and are fed to a profile evaluation device (PAW).

4. Apparatus according to Claim 3,
**characterized** in that the measured values obtained from the filter banks for the range and Doppler frequency are interpolated by comparing the amplitudes of the individual filters.

## Revendications

1. Procédé de classification de véhicules au moyen d'un appareil radar pour trafic, lequel saisit, à partir d'un emplacement élevé et avec un rayon d'antenne de radar fortement dirigé vers le bas, une zone de routes située à proximité et effectue une mesure de la distance ainsi qu'une mesure de la fréquence Doppler pour saisir le profil du véhicule, la silhouette du véhicule étant saisie en tant que silhouette de véhicule par une mesure continue de l'écartement entre l'appareil radar et la surface de réflexion momentanée du véhicule traversant le rayon du radar, caractérisé en ce que pour l'identification précise des véhicules par une mesure continue de la fréquence Doppler, l'allure de la pente ascendante du profil du véhicule, c'est-à-dire l'angle entre la tangente à la ligne de la silhouette du véhicule et la route, est saisie et en ce qu'à partir de la proportionnalité de la fréquence Doppler mesurée à la tangente de l'angle entre le rayon radar et les perpendiculaires aux tangentes de la ligne de la silhouette du véhicule saisie momentanément, les véhicules font l'objet d'une classification et sont catalogués.

2. Procédé selon la revendication 1, caractérisé en ce que les valeurs d'écartement et de fréquence déterminées sont comparées aux valeurs du catalogue pour une réidentification de certains types de véhicules.

3. Dispositif de mise en oeuvre du procédé selon l'une des revendications précédentes 1 ou 2, comprenant un appareil radar pour trafic avec un rayon d'antenne radar dirigé fortement vers le bas, qui contient des dispositifs pour mesurer la distance et mesurer la fréquence Doppler, caractérisé en ce qu'est prévu pour la mesure de la distance un banc de filtres de longueur (EFB) composé de plusieurs (n) filtres de longueur (EF1 à EFn), qui sont montés en aval de l'appareil radar (RG) via un amplificateur de signal (VS) et un convertisseur analogique-digital (AD), plusieurs (n) zones de longueur (R1 à Rn) étant de ce fait formées, en ce qu'un banc de filtres de la fréquence Doppler (DFB) comprenant plusieurs filtres de la fréquence Doppler (FIni) est monté en aval de chaque filtre de longueur (EFn), et en ce que les amplitudes (AMP) des signaux de sortie respectifs sont déterminées par les filtres de la fréquence Doppler (FI, ni) et sont amenées (AMPE) à un dispositif d'évaluation du profil (PAW).

4. Dispositif selon la revendication 3, caractérisé en ce que les valeurs mesurées obtenues à partir des bancs de filtres pour la longueur et la fréquence Doppler sont interpolées par la comparaison des amplitudes des filtres individuels.
